# EUROPÄISCHE PATENTSCHRIFT

(11) **EP 1 374 704 B1**
(45) Veröffentlichungstag und Bekanntmachung des Hinweises auf die Patenterteilung: **11.07.2007**
(21) Anmeldenummer: 03010075.4
(22) Anmeldetag: 03.05.2003
(51) Int. Cl.: A23N 12/08

(54) **Verfahren und Einrichtung zur Röstung kleiner Mengen von Kaffeebohnen**
Method and apparatus for roasting small amounts of coffee beans
Procédé et appareil de torréfaction de petites quantités de graines de café

(30) Priorität: 28.06.2002 DE 10229269
(43) Veröffentlichungstag der Anmeldung: 02.01.2004
(73) Patentinhaber: Coffee Star Jutta Krebs Marianne Brück GbR, 10405 Berlin (DE)
(72) Erfinder: Munk, Harald, 23820 Eilsdorf (DE)
(74) Vertreter: Kietzmann, Manfred

(56) Entgegenhaltungen:
- DE-A- 19 645 306
- US-A- 5 960 561
- US-A- 6 036 988
- US-B1- 6 260 479

## Beschreibung

Die Erfindung betrifft ein Verfahren und eine Einrichtung zur Röstung kleiner Mengen von Kaffeebohnen nach dem Oberbegriff der Ansprüche 1 und 5.

Zur Zubereitung eines besonders aromatischen und frischen Kaffees ist es bekannt, Kaffeebohnen erst unmittelbar vor dem Mahlen der Bohnen und Aufbrühen zu rösten. Dadurch wird vermieden, dass sich Aromastoffe bei längerer Lagerung verflüchtigen. Es ist zwar auch bekannt, gemahlenen Kaffee in Vakuumverpackungen über längere Zeiträume zu lagern, jedoch ergibt auch dies eine Aromabeeinflussung.

Es ist daher erwünscht, möglichst röstfrischen Kaffee benutzen zu können.

Es sind Kaffeebohnenröster bekannt geworden, die im Haushalt verwendbar sind. Jedoch ist es schwierig, unter Haushaltsbedingungen die zum Rösten der Bohnen geeigneten Verfahrensparameter zu gewährleisten.

Eine qualitativ höherwertige Stufe von Röstgeräten lässt sich jedoch ökonomisch in Einzelhandelsgeschäften einsetzen, wobei auch hierbei die Zeitdauer zwischen Röstvorgang und Verbrauch sehr klein gehalten werden kann. Ein für solche Zwecke geeigneter Kaffeebohnenröster ist aus der EP 0 288 870 B1 bekannt geworden. Bei dieser Einrichtung wird eine zylindrische Röstkammer verwendet, der Heißluft derart zugeführt wird, dass sich in der Röstkammer ein Wirbelbett einstellt, in dem eine gleichmäßige Röstung der Kaffeebohnen durchgeführt wird. Wenige Minuten nach der Röstung können die abgekühlten Kaffeebohnen gemahlen werden und ergeben nach Aufbrühen ein besonders frisches und aromareiches Kaffeegetränk.

Zur Bedienung und Steuerung der Verfahrensparameter dieses Gerätes ist eine umfangreiche Einarbeitung der Bedienungsperson erforderlich, um professionelle Ergebnisse zu erzielen. Eine Bedienung des Gerätes durch einen Kunden ist daher nicht möglich.

Die Schrift US 5960561 offenbart ein Verfahren zum Rösten von kleinen Chargen von Kaffeebohnen. In diesem Verfahren wird die Heißluft allein durch eine rotierenden Ventilator an den Kaffeebohnen vorbei gedrückt. Die Regelung und Steuerung des Röstvorganges geschieht über einen Potentiometer. Die gerösteten Chargen Kaffeebohnen werden nach dem Röstvorgang in der Röstkammer gekühlt bevor sie entnommen werden können.

Aus der US 6,053,093 ist ein Kaffeebohnenröster mit einer programmierbaren Steuereinheit bekannt, bei dem die Parameter Röstdauer und Rösttemperatur als wählbare Datensätze in der Steuereinheit gespeichert sind.

Die alleinige Einstellung von Röstdauer und Rösttemperatur ergibt jedoch kein optimales Röstergebnis.

Der Erfindung liegt die Aufgabe zugrunde, ein Verfahren und eine Einrichtung zur Röstung kleiner Mengen von Kaffeebohnen mit einem Kaffeebohnenröster, insbesondere der vorstehend angegebenen Art, anzugeben, bei dem der Bedienungsaufwand minimiert ist, aber gleichwohl qualitativ hochwertige Röstergebnisse erzielt werden können.

Diese Aufgabe wird durch die in den Ansprüchen 1 und 5 angegebene Erfindung gelöst. Vorteilhafte Weiterbildungen der Erfindung sind in Unteransprüchen angegeben.

Die Erfindung geht aus von einem Verfahren zur Röstung kleiner Mengen von Kaffeebohnen in einer vertikal gerichteten zylindrischen Röstkammer, der ungeröstete Kaffeebohnen chargenweise zuführbar und daraus nach Durchlauf des Röstvorgangs entnehmbar sind, wobei die Röstung mittels eines die Röstkammer durchströmenden Heißluftstroms erfolgt und die gerösteten Kaffeebohnen nach Entfernung aus der Röstkammer durch einen Kaltluftstrom abgekühlt werden. Dabei ist die Röstung und Abkühlung der Kaffeebohnen mittels einer programmierbaren Steuereinheit steuerbar, wobei wenigstens die Kombination der Parameter Röstdauer, Rösttemperatur und Volumenstrom der Röstheißluft als wählbarer Datensatz in der Steuereinheit gespeichert ist, und wobei der Heißluftstrom mittels eines frequenzgesteuerten Seitenkanalverdichters steuerbar ist.

Durch Auswahl eines zuvor festgelegten Datensatzes an der Steuereinheit ist es daher einer Bedienungsperson möglich, abhängig vom gewünschten Röstergebnis oder den zur Verfügung stehenden zu röstenden Kaffeebohnen hochqualitative Röstergebnisse zu erzielen, ohne dass spezielle Kenntnisse über maschinentechnische Gegebenheiten und andere das Röstergebnis beeinflussende Parameter der zu röstenden Kaffeebohnen erforderlich sind.

Ein mit dem erfindungsgemäßen Verfahren betriebener Kaffeebohnenröster kann daher auch von nicht ausgebildeten Bedienungspersonen betrieben werden, wobei es auch möglich ist, dass Kunden selbst die Kaffeebohnenröster in Betrieb setzen und selbsttätig bedienen, so dass das Eingreifen von geschulten Bedienungspersonen nur zu Wartungs- und Reinigungszwecken erforderlich ist. Damit lassen sich die Handhabungskosten eines derartigen Kaffeebohnenrösters erheblich verringern.

Die Parameter der verwendbaren Datensätze sind vorzugsweise individuell per Programm einstellbar und können bei der erstmaligen oder auch späteren Anpassung des Kaffeebohnenrösters an die zur Verfügung stehenden Kaffeebohnensorten, Mengen und den individuellen Kaffeebohnenröster angepasst werden.

Die Röstgrundparameter definieren vorzugsweise zusätzlich die Parameter Volumenstrom der Kühlluft und die Kühldauer, so dass auch die Kühlung der gerösteten Kaffeebohnen individuell einstellbar ist.

Als weitere Parameter der Datensätze können die Röstfarbe bzw. der Schwärzungsgrad der Kaffeebohnen, die Einfüllmenge, die Ablufttemperatur und ggf. weitere Parameter, die das Röstergebnis beeinflussen, den Datensätzen hinzugefügt werden.

Die die Röstung beeinflussenden Parameter können zeitabhängig in ihren jeweiligen Grenzwerten festgelegt werden, so dass die Parameter untereinander abhängig gemacht werden können oder dem Röstverlauf angepasst werden können.

Da der Heißluftstrom zur Röstung der Kaffeebohnen mittels Drehzahlsteuerung eines Seitenkanalverdichters gesteuert wird, kann die Geräuschentwicklung des Kaffeebohnenrösters erheblich reduziert werden, da nur für kleine Zeiträume der volle Volumenstrom an Heißluft erforderlich ist.

Der Volumenstrom zur Ausbildung des Röstbettes in der Röstkammer kann damit vorteilhaft an den Röstfortschritt angepasst werden.

Der Frequenzumrichter kann außerdem große Spannungsschwankungen der Versorgungsspannung ausgleichen.

Die Erfindung wird nachstehend anhand eines Ausführungsbeispiels näher erläutert. Es zeigen:
- Fig. 1: eine Seitenansicht eines Kaffeebohnenrösters, und
- Fig. 2: eine Vorderansicht eines Kaffeebohnenrösters.

Durch den Einsatz der Erfindung lässt sich eine vollautomatische Röstmaschine zur Röstung von Kaffee betreiben. Lediglich die Beschickung mit grünen, ungerösteten Bohnen sowie die Entnahme der fertig gerösteten Kaffeebohnen erfolgt manuell.

Nach der Erfindung laufen die Verfahrensschritte der Erwärmung, der Röstung und der Abkühlung bei allen Röstprogrammen programmgesteuert ab. In dem Röster wird vorzugsweise eine SPS (speicherprogrammierbare Steuerung), wie aus anderen industriellen Geräte bekannt, verwendet. Diese erlaubt es, mehrere Programmspeicherplätze zur Verfügung zu stellen. Diese Programmspeicherplätze enthalten vorzugsweise jeweils nachfolgende, veränderbare Röstparameter:
- Röstdauer
- Rösttemperatur (die über den zeitlichen Verlauf der Röstgesamtzeit veränderbar ist)
- Volumenstrom der Röstheißluft (über den zeitlichen Verlauf der Röstgesamtzeit veränderbar.

Da die Rohkaffeemenge und die individuellen Eigenschaften des Kaffees den Energiebedarf einer Röstung bestimmen, sind die Röstparameter der Programmspeicherplätze auf die zu röstende Charge abzustimmen. Auch unterschiedliche Röstgrade eines Rohkaffees sind durch Korrektur des Energieeintrages innerhalb eines Programms bzw. Wahl eines anderen Programms mit unterschiedlichem Energieeintrag röstbar.

Zur Durchführung einer Röstung sind nicht in jedem Fall alle der vorgenannten Parameter erforderlich. Sofern gewünscht, können weitere Parameter, die die Steuerung des Röstvorgangs oder den Betrieb des Kaffeebohnenrösters beeinflussen können, verwendet werden, wie Volumenstrom der Kühlluft, Kühldauer, Farbe der Kaffeebohnen, Schwärzungsgrad, Einfüllmenge, Ablufttemperatur. Die Verfahrensparameter können Sollwerte oder Grenzwerte darstellen und können zeitlich variierend eingesetzt werden. Beispielsweise verfügen die noch nicht gerösteten Kaffeebohnen anfänglich über einen relativ hohen Anteil an Röstfeuchte, der für eine schwere Durchmischung in der Röstkammer verantwortlich ist. Um diesem Stadium zu entsprechen, kann entweder die Anfangstemperatur der Röstmaschine sehr hoch eingestellt werden oder der Volumenstrom der Röstluft kann entsprechend hoch gewählt werden. Die Parameter können verwendet werden, um die entsprechenden Schaltgeräte, wie z. B. Heizung oder Ventilator, einzustellen oder zu regeln. Um eine hochwertige Regelung zu ermöglichen, sind in dem Kaffeebohnenröster an geeigneten Stellen Sensoren vorhanden, die die Regelgrößen zur Festlegung der Verfahrensparameter bestimmen.

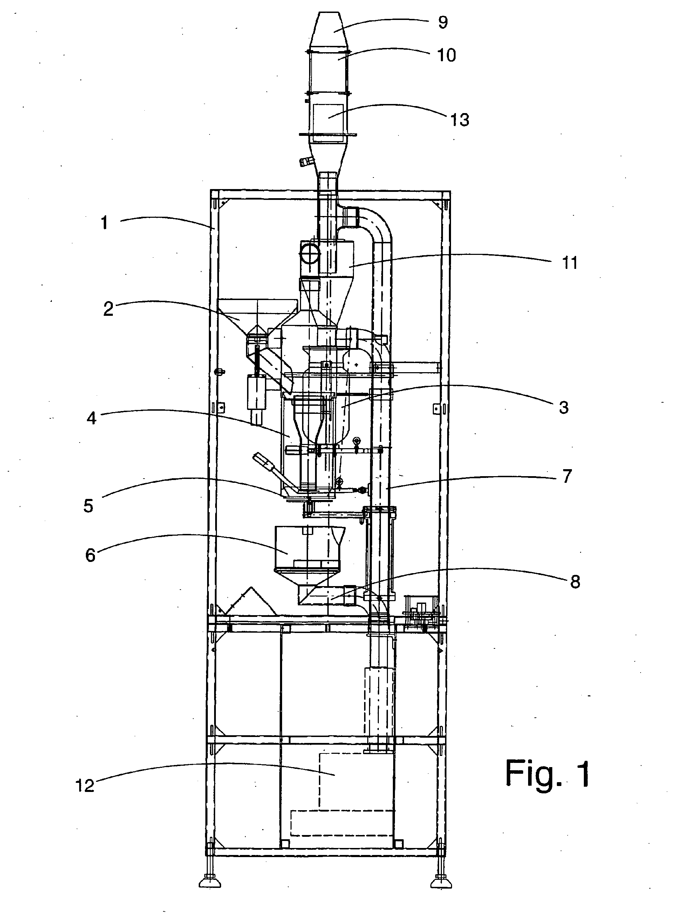

Der in Fig. 1 dargestellte Kaffeebohnenröster enthält ein Gehäuse 1, das insbesondere als Rahmengehäuse mit Glaswänden ausgebildet ist, um dem Kunden die Ansicht der Maschine zu ermöglichen. Gleichzeitig schirmt das Gehäuse die Betriebsgeräusche der Maschine ab. Der grundsätzliche Aufbau eines Kaffeebohnenrösters der dargestellten Art ist aus der EP 0 288 870 bereits entnehmbar.

Über einen optional verschwenkbaren Einfülltrichter 2 kann eine bestimmte Menge an Kaffeebohnen in die Maschine eingegeben werden. Die Kaffeebohnen fallen dabei in die zylindrische durchsichtige Röstkammer 4, in der sie in einem Wirbelbett durch Zuführung eines zentralen Heißluftstroms durch eine Rohrleitung 7 geröstet werden. Nach dem Ende des Röstvorgangs werden sie über eine hydraulisch, penumatisch oder elektrisch betätigte Bodenklappe 5 in einen Auffangbehälter 6 übergeben, der über die Rohrleitung 8 mit Kaltluft durchströmt wird, um die Kühlung der gerösteten Kaffeebohnen zu bewirken.

Die beim Rösten entstehenden Häutchen und Spelzen werden aus dem Abluftstrom in einem Zyklon 11 abgesondert und in einem Auffangbehälter 3 gesammelt. Der den Zyklon 11 verlassende Luftstrom wird über einen Kamin 9, dem ein Nachverbrennungskatalysator 10 und eine Heizpatrone 13 zur Abluftnacherhitzung vorgeschaltet sind, an die Umgebung abgegeben.

Das Entleeren der Röstkammer 4 kann programmgesteuert erfolgen. Wenn der Einfülltrichter und/oder der Auffangbehälter verschwenkbar ausgeführt sind, kann das Verschwenken ebenfalls programmgesteuert erfolgen. Damit ist für den vollautomatischen Betrieb des Röstvorgangs nur erforderlich, eine bestimmte Menge an Kaffeebohnen in den Einfülltrichter 2 einzugeben und nach Ende des Röstvorgangs aus dem Auffangbehälter 6 zu entnehmen.

Der Auffangbehälter 6 kann auch so gestaltet werden, dass nach Verschwenken aus dem Gehäuse 1 eine Auffangtüte an die Unterseite des Auffangbehälters 6 angeklemmt werden kann, so dass die gerösteten Kaffeebohnen unmittelbar in die Auffangtüte übergeben werden können.

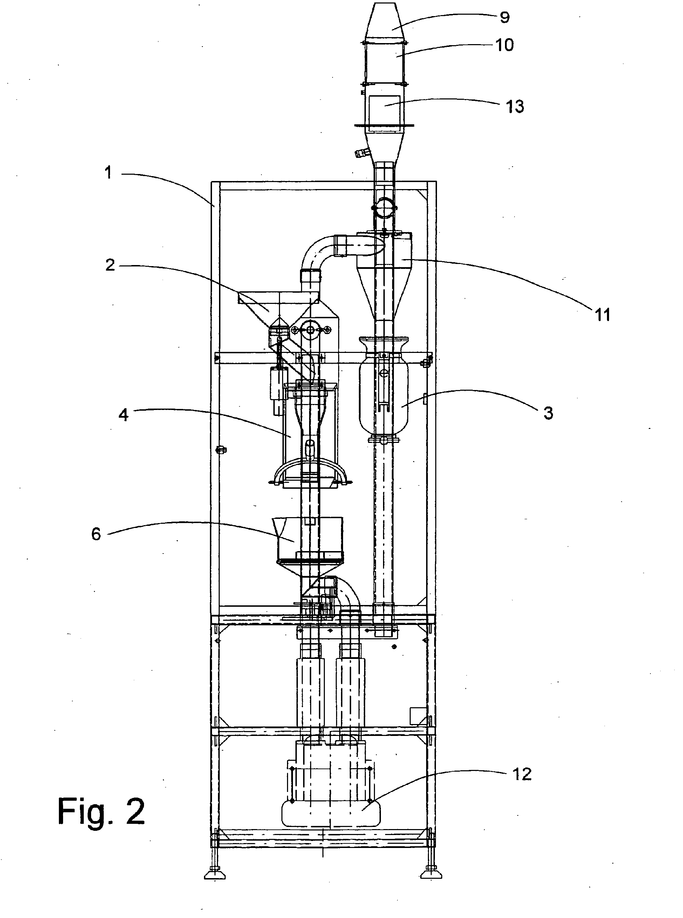

Fig. 2 zeigt den Kaffeebohnenröster von Fig. 1 in einer Vorderansicht. Neben den bereits angegebenen Elementen des Kaffeebohnenrösters zeigt Fig. 2 insbesondere noch den Lüfter 12, der als Seitenkanalverdichter ausgeführt ist. Dieser erzeugt den Druckluftstrom für die Röstung des Kaffees über die Rohrleitung 7 und den Saugluftstrom über die Rohrleitung 8 zur Kühlung der Bohnen. Durch Änderung der Frequenz des Verdichters kann die Luftmenge erhöht oder verringert werden. Dies hat über die Strömungsgeschwindigkeit der Luft sowohl Auswirkungen auf den Röstvorgang und die Durchmischung der Bohnen als auch auf die Geräuschemission der Maschine. Damit ist es möglich, nach der Anröstphase und damit Trocknung der ursprünglich grünen Kaffeebohnen die Luftmenge zu reduzieren, um auch die Geräuschemission zu verringern. Kurz vor Röstende ist noch eine weitere Reduzierung der Luftmenge erforderlich, da der Gewichtsverlust der Kaffeebohnen so stark ist, dass kleine Bohnen im Abluftstrom entfernt werden könnten. Daher wird die Arbeitsfrequenz des Seitenkanalverdichters auf einen sehr kleinen Wert eingestellt, so dass die Geräuschemission sehr gering ist.

Zugleich mit der Reduzierung der Frequenz des Seitenkanalverdichters kann auch die Rösttemperatur stufenweise abgesenkt werden.

Beim Befüllen der Bohnen in die Röstkammer, dem Entleeren des gerösteten Kaffees in den Kühlbehälter und das Entleeren des Häutchentopfes wird der Seitenkanalverdichter vollständig abgeschaltet. Dies kann durch geeignete Schaltelemente beim Betätigen der jeweiligen Behälter selbsttätig ausgeführt werden. Daraus ergibt sich auch der Vorteil, dass auf Luftklappen, Ventile oder Schieber vollständig verzichtet werden kann. Dadurch werden auch Reinigungs- und Wartungsarbeiten erheblich vereinfacht und verringert.

Durch die Erfindung ergibt sich ein vollautomatisch betreibarer Kaffeebohnenröster für kleine Mengen, der insbesondere in Einzelhandelsgeschäften einsetzbar ist. Die programmtechnische Festlegung der Röstparameter erlaubt es, bestimmte Verfahrenskombinationen auszuwählen. Beispielsweise können bestimmte Kaffeebohnensorten die Wahl einer bestimmten Parameterkombination erfordern. Z. B. kann für Kaffeebohnen aus einer Provenienz A durch Druck an einer Taste die Wahl der Schaltstufe 1 erforderlich werden. Zum Betrieb der Maschine wird daher z. B. 1000g Rohkaffee in den Einfülltrichter gefüllt und nach der Wahl der Schaltstufe 1 wird eine Starttaste gedrückt. Die Röstung läuft dann gemäß Programmauswahl automatisch ab. Nach Beendigung des Röstvorgangs kann der geröstete Kaffee dann aus dem optional ausgeschwenkten Auffangbehälter (Kühlbehälter) entnommen werden.

Wenn sich ergibt, dass ein fest für eine bestimmte Provenienzen eingestelltes Programm kein optimales Röstergebnis erbringt, können auf der Programmierebene des Gerätes die Parameter einer Parameterkombination leicht geändert werden. Die entsprechenden Techniken zur Programmänderung sind allgemein bekannt.

### Bezugszeichen

- 1: Gehäuse
- 2: Einfülltrichter
- 3: Auffangbehälter
- 4: Röstkammer
- 5: Bodenklappe
- 6: Kühlbehälter
- 7: Rohrleitung
- 8: Rohrleitung
- 9: Kamin
- 10: Katalysator
- 11: Zyklon
- 12: Lüfter
- 13: Heizpatrone

## Patentansprüche

1. Verfahren zur Röstung kleiner Mengen von Kaffeebohnen in einer vertikal gerichteten zylindrischen Röstkammer (4), wobei ungeröstete Kaffeebohnen der Röstkammer (4) chargenweise zugeführt und nach dem Röstvorgangs der Röstkammer entnommen werden, wobei die Röstung mittels eines die Röstkammer (4) durchströmenden Heißluftstroms erfolgt, und die gerösteten Kaffeebohnen nach Entfernung aus der Röstkammer durch einen Kaltluftstrom abgekühlt werden,
**dadurch gekennzeichnet, dass**
die Röstung und Abkühlung der Kaffeebohnen mittels einer programmierbaren Steuereinheit gesteuert wird, wobei wenigstens die Kombination der Parameter Röstdauer, Rösttemperatur und Volumenstrom der Röstheißluft als wählbare Datensätze mit einstellbaren Parametern in der Steuereinheit gespeichert sind, wobei der Heißluftstrom mittels eines frequenzgesteuerten Seitenkanalverdichters gesteuert wird.

2. Verfahren nach Anspruch 1, **dadurch gekennzeichnet dass**
die Datensätze zusätzlich die Parameter Volumenstrom der Kühlluft und Kühldauer enthalten.

3. Verfahren nach Anspruch 1 oder 2, **dadurch gekennzeichnet, dass**
die Datensätze zusätzlich die Parameter Farbe, Schwärzungsgrad der Kaffeebohnen, Einfüllmenge und/oder Ablufttemperatur enthalten.

4. Verfahren nach einem der vorhergehenden Ansprüche, **gekennzeichnet durch** zeitliche Variation der Betriebs- und/oder Grenzparameter der Datensätze.

5. Einrichtung zur Röstung kleiner Mengen von Kaffeebohnen, bestehend aus
einer vertikal gerichteten zylindrischen Röstkammer (4), einem Mittel zur Erzeugung eines die Röstkammer (4) durchströmenden Heißluftstroms, einem Mittel zur Erzeugung eines Kaltluftstroms zur Abkühlung der gerösteten Kaffeebohnen nach deren Entfernung aus der Röstkammer, einer programmierbaren Steuereinheit zur Steuerung der Röstung und Abkühlung der Kaffeebohnen,
in der Steuereinheit gespeicherte und wählbare Datensätze mit einstellbaren Parametern, wobei die Datensätze wenigstens die Kombination der Parameter Röstdauer, Rösttemperatur und Volumenstrom der Röstheißluft beinhalten, und
einem frequenzgesteuerten Seitenkanalverdichter zur Steuerung des Heißluftstrom.

6. Einrichtung nach Anspruch 5,
**dadurch gekennzeichnet, dass**
die Datensätze zusätzlich die Parameter Volumenstrom der Kühlluft und Kühldauer enthalten.

7. Einrichtung nach Anspruch 5 oder 6,
**dadurch gekennzeichnet, dass**
die Datensätze zusätzlich die Parameter Farbe, Schwärzungsgrad der Kaffeebohnen, Einfüllmenge und/oder Ablufttemperatur enthalten.

## Claims

1. A method for roasting small quantities of coffee beans in a vertically aligned, cylindrical roasting chamber (4), whereby unroasted coffee beans are fed in batches to the roasting chamber (4) and are removed from the roasting chamber following the roasting procedure, whereby the roasting is conducted by means of a hot air flow which flows through the roasting chamber (4), and the roasted coffee beans are cooled after being removed from the roasting chamber by a cool air flow, **characterized in that**
the roasting and cooling of the coffee beans is controlled by means of a programmable control unit, whereby at least the combination of the parameters for the roasting duration, roasting temperature and volume flow of the hot roasting air are stored as selectable data sets with adjustable parameters in the control unit, whereby the hot air flow is controlled by means of a frequency-controlled side channel compressor.

2. A method according to claim 1, **characterized in that**
the data sets also contain the parameters for the volume flow of the cooling air and the duration of cooling.

3. A method according to either of claims 1 or 2, **characterized in that**
the data sets also contain the parameters for the colour, degree of blackening of the coffee beans, the filling quantity and/or the outlet air temperature.

4. A method according to any one of the preceding claims, **characterized by** a time variation of the operating and/or the limit parameters of the data sets.

5. A device for roasting small quantities of coffee beans, consisting of a vertically aligned, cylindrical roasting chamber (4), a means for producing a hot air flow which flows through the roasting chamber (4), a means for producing a cool air flow in order to cool the roasted coffee beans after they have been removed from the roasting chamber, a programmable control unit for controlling the roasting and cooling of the coffee beans, data sets which are stored in the control unit and which are selectable, with adjustable parameters, whereby the data sets contain at least the combination of the parameters for the roasting duration, roasting temperature and volume flow of the hot roasting air, and a frequency-controlled side channel compressor for controlling the hot air flow.

6. A device according to claim 5,
**characterized in that**
the data sets also contain the parameters for the volume flow of the cooling air and the cooling duration.

7. A device according to either of claims 5 or 6,
**characterized in that**
the data sets also contain the parameters for the colour, degree of blackening of the coffee beans, the filling quantity and/or the outlet air temperature.

## Revendications

1. Procédé pour la torréfaction de petites quantités de grains de café dans une chambre de torréfaction (4) cylindrique disposée verticalement, la chambre de torréfaction (4) étant alimentée de manière discontinue en grains de café non torréfiés, ceux-ci étant retirés de la chambre après torréfaction, la torréfaction étant effectuée au moyen d'un courant d'air chaud s'écoulant à travers de la chambre de torréfaction (4), et les grains de café torréfiés étant refroidis par un courant d'air froid après leur retrait de la chambre de torréfaction, **caractérisé en ce que**
la torréfaction et le refroidissement des grains de café sont commandés au moyen d'une unité de commande programmable, au moins la combinaison des paramètres que sont la durée de torréfaction, la température de torréfaction et le débit volumique de l'air de torréfaction chaud étant mémorisée dans l'unité de commande en tant qu'enregistrements sélectionnables à paramètres réglables, le courant d'air chaud étant commandé au moyen d'un compresseur à canal latéral à commande fréquentielle.

2. Procédé selon la revendication 1, **caractérisé en ce que**
les enregistrements comprennent en outre les paramètres que sont le débit volumique de l'air de refroidissement et la durée de refroidissement.

3. Procédé selon la revendication 1 ou 2, **caractérisé en ce que**
les enregistrements comprennent en outre les paramètres que sont la couleur, le degré de noircissement des grains de café, la quantité de remplissage et/ou la température de l'air évacué.

4. Procédé selon l'une des revendications précédentes, **caractérisé par** la variation temporelle des paramètres de service et/ou des paramètres limites des enregistrements.

5. Dispositif pour la torréfaction de petites quantités de grains de café, composé
d'une une chambre de torréfaction (4) cylindrique disposée verticalement,
d'un moyen pour la génération d'un courant d'air chaud s'écoulant à travers de la chambre de torréfaction (4),
d'un moyen pour la génération d'un courant d'air froid pour le refroidissement des grains de café torréfiés après leur retrait de la chambre de torréfaction,
d'une unité de commande programmable pour la commande de la torréfaction et du refroidissement des grains de café,
d'enregistrements à paramètres réglables mémorisés dans l'unité de commande et sélectionnables, lesdits enregistrements comprenant au moins la combinaison des paramètres que sont la durée de torréfaction, la température de torréfaction et le débit volumique de l'air de torréfaction chaud, et
d'un compresseur à canal latéral à commande fréquentielle pour la commande du courant d'air chaud.

6. Dispositif selon la revendication 5,
**caractérisé en ce que**
les enregistrements comprennent en outre les paramètres que sont le débit volumique de l'air de refroidissement et la durée de refroidissement.

7. Dispositif selon la revendication 5 ou 6,
**caractérisé en ce que**
les enregistrements comprennent en outre les paramètres que sont la couleur, le degré de noircissement des grains de café, la quantité de remplissage et/ou la température de l'air évacué.
